# EUROPEAN PATENT APPLICATION

(11) **EP 0 932 293 A2**
(43) Date of publication of application: **28.07.1999**
(21) Application number: 98304410.8
(22) Date of filing: 04.06.1998
(51) Int. Cl.: H04N 1/113

(54) **Multi-beam scanning apparatus**

(30) Priority: 26.01.1998 KR 9802412
(71) Applicant: Samsung Electronics Co., Ltd., Suwon-city, Kyungki-do (KR)
(72) Inventor: Cho, Sung-min, Kangseo-gu, Seoul (KR); Lee, Won-hyung, Kangnam-gu, Seoul (KR); Choi, Min-ho, Uiwang-city, Kyungki-do (KR)
(74) Representative: Chugg, David John

(57) **Abstract**

A multi beam scanning apparatus including a beam deflector (20) having a deflection disk (23) on which a plurality of sectors (24a-d) for diffracting and transmitting incident beams are formed, and a driving source (21) for rotating the deflection disk (23), for deflecting the incident beams, at least two optical sources (10) for emitting beams onto different sectors of the deflection disk (23), and a beam path changing means (30) for changing the path of at least one beam among the deflected beams to allow the beams deflected by the beam deflector (20) to form parallel scan lines on an image plane (61).

## Description

The present invention relates to a multi-beam scanning apparatus for deflecting and projecting together at least two beams emitted from optical sources to form an electrostatic latent image on a photosensitive medium such as a photoreceptor belt in an electrophotographic printer, etc.

A general beam scanning apparatus is adopted in a printer, and charges a photosensitive medium by a main scan using a beam deflector and a sub scan using the motion or rotation of the photosensitive medium.

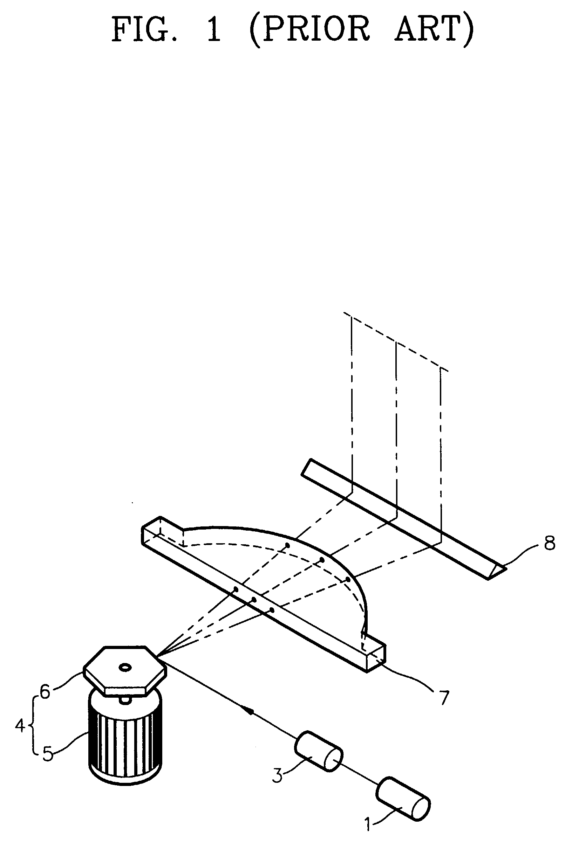

Referring to Figure 1, showing the optical arrangement of a conventional beam scanning apparatus, the beam scanning apparatus includes an optical source 1, a beam deflector 4 for deflecting beams emitted from the optical source 1, and an f-theta (f-θ) lens 7 for compensating for an error in the light deflected by the beam deflector 4.

A focusing lens 3 is installed between the optical source 1 and the beam deflector 4, to focus the beam emitted from the optical source 1. The beam deflected by the beam deflector 4 is reflected by a mirror 8, and the reflected beam proceeds toward a photosensitive drum (not shown).

The beam deflector 4 is comprised of a motor 5 and a rotating polygonal mirror 6 rotated by the motor 5. The beam emitted from the optical source 1 is deflected according to the angle formed between the beam and a reflective facet of the rotating polygonal mirror 6. Accordingly, the beam deflection is sensitive to wobble generated when the rotating polygonal mirror 6 is rotated.

Also, a colour printer must have a separate beam scanning apparatus for each specific colour, so it is complicated and enlarged.

With a view to solve or reduce the above problems, it is an aim of preferred embodiments of the present invention to provide a multi-beam scanning apparatus by which at least two optical beams can be deflected and projected together.

According to a first aspect of the invention, there is provided a multi beam scanning apparatus comprising: a beam deflector having a deflection disk on which a plurality of sectors for diffracting and transmitting incident beams are formed, and a driving source for rotating the deflection disk, for deflecting the incident beams; at least two optical sources for emitting beams onto different sectors of the deflection disk; and a beam path changing means for changing the path of at least one beam among the deflected beams to allow the beams deflected by the beam deflector to form parallel scan lines on an image plane.

The beam path changing means is preferably comprised of a plurality of mirrors.

The sectors are preferably comprised of patterns formed by equally dividing the deflection disk.

The multi beam scanning apparatus may further comprise a beam correcting means for correcting the beams deflected by the deflection disk.

The beam correcting means may comprise: reflective members for focusing and reflecting the beams deflected by the deflection disk; and hologram elements for diffracting and transmitting the reflected beams in a sub scan direction of the photoreceptor.

Preferably, the deflection disk is comprised of four sectors and the optical source comprises four optical sources for projecting beams into the respective sectors.

For a better understanding of the invention, and to show how embodiments of the same may be carried into effect, reference will now be made, by way of example, to the accompanying diagrammatic drawings, in which:
Figure 1 is a perspective view of a conventional beam scanning apparatus;
Figure 2 is a perspective view of a multi-beam scanning apparatus according to an embodiment of the present invention; and
Figure 3 is a side view of a multi-beam scanning apparatus according to another embodiment of the present invention.

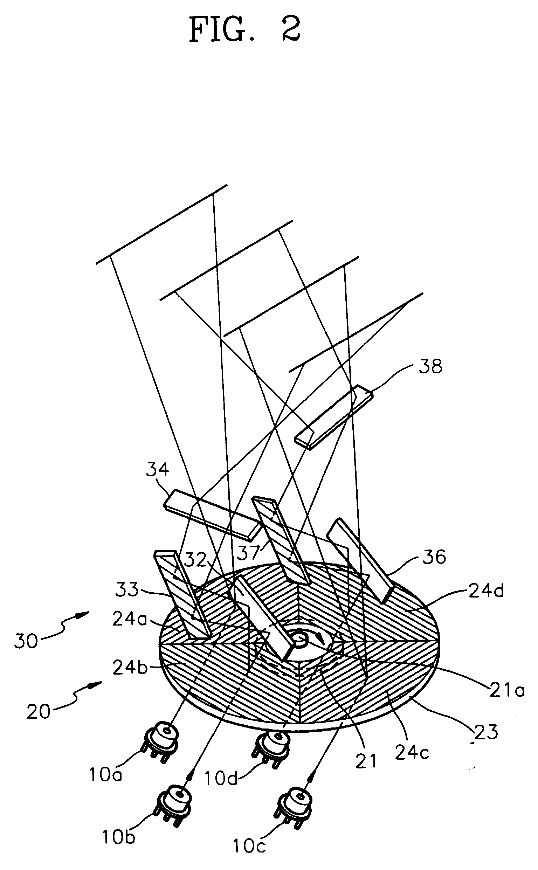

Referring to Figure 2, a multi-beam scanning apparatus according to an embodiment of the present invention includes at least two optical sources 10a, 10b, 10c and 10d, a beam deflector 20 for deflecting and projecting beams emitted from the optical sources 10a through 10d, and a beam path changing means 30 for changing the light path.

The optical sources 10a through 10d are semiconductor lasers for emitting laser beams, and are selectively driven.

The beam deflector 20 is comprised of a driving motor 21 for providing a rotation force, and a deflection disk 23 having a plurality of sectors 24a through 24d and fitted to a rotation shaft 21a of the driving motor 21, for diffracting and deflecting incident beam.

The deflection disk 23 is equally divided into the sectors 24a through 24d. As shown in Figure 2, the sectors 24a through 24d are patterned to diffract and transmit incident beams to thereby deflect and project the diffracted beams in one scan line units according to the rotation of the deflection disk 23. Preferably, the number of sectors is the same as the number of optical sources.

The optical sources 10a through 10d are disposed to allow the emitted beams to be incident upon different sectors 24a through 24d. That is, the first and third optical sources 10a and 10c are arrayed to allow the two beams emitted therefrom to be incident into first and third sectors 24a and 24c opposite to each other. The second and fourth optical sources 10b and 10d are arrayed to allow the two beams emitted therefrom to be incident upon the second and fourth sectors 24b and 24d opposite to each other.

In this case, beams diffracted and deflected by the first and third sectors 24a and 24c are projected in parallel. As shown in Figure 2, when four equal sectors 24a through 24d are formed, the beams diffracted and deflected by the second and fourth sectors 24b and 24d are projected approximately perpendicularly to the beams diffracted and deflected by the first and third sectors 24a and 24c. The angle between the beams deflected by the first and third sectors 24a and 24c and the beams deflected by the second and fourth sectors 24b and 24d varies according to the number of sectors on the deflection disk 23. The beams emitted from the optical sources 10a through 10d are projected along a scan line as the deflection disk 23 rotates.

The beam path changing means 30 changes the path of at least one of the diffracted and deflected beams so that the beams diffracted and deflected by the sectors 24a through 24d are projected in parallel into an image plane (not shown) such as a photoreceptor belt.

The beam path changing means 30 is comprised of a plurality of mirrors 32, 33, 34, 36, 37 and 38 for reflecting beams emitted from the sectors 24a through 24d of the deflection disk 23. In the present embodiment, the first mirrors 32, 33 and 34 reflect the beam emitted from the optical source 10b and diffracted and deflected by the sector 24b to be projected into the image plane parallel to the beams emitted from the optical sources 10a and 10c and diffracted and deflected by the sectors 24a and 24c. The second mirrors 36, 37 and 38 reflect the beam emitted from the optical source 10d and diffracted and deflected by the sector 24d to be projected into the image plane parallel to the beams emitted from the optical sources 10a and 10c and diffracted and deflected by the sectors 24a and 24c. Thus, the paths of the beams emitted from the optical sources 10b and 10d are changed by 90°.

Consequently, the beams, emitted from the optical sources 10a through 10d and diffracted and deflected by the sectors 24a through 24d, form parallel scan lines on the image plane.

As the number of sectors 24a through 24d varies, the angle of a beam to be changed by the beam path changing means can be appropriately controlled.

Preferably, a beam correcting means (not shown) for correcting deflected beams is further provided on a light path between the deflection disk 23 and the image plane. As is well known, an f-theta lens for correcting the aberration of beams projected in a main scan direction, and shaping the beams according to the rotation of the deflection disk 23, can be used as this beam correcting means.

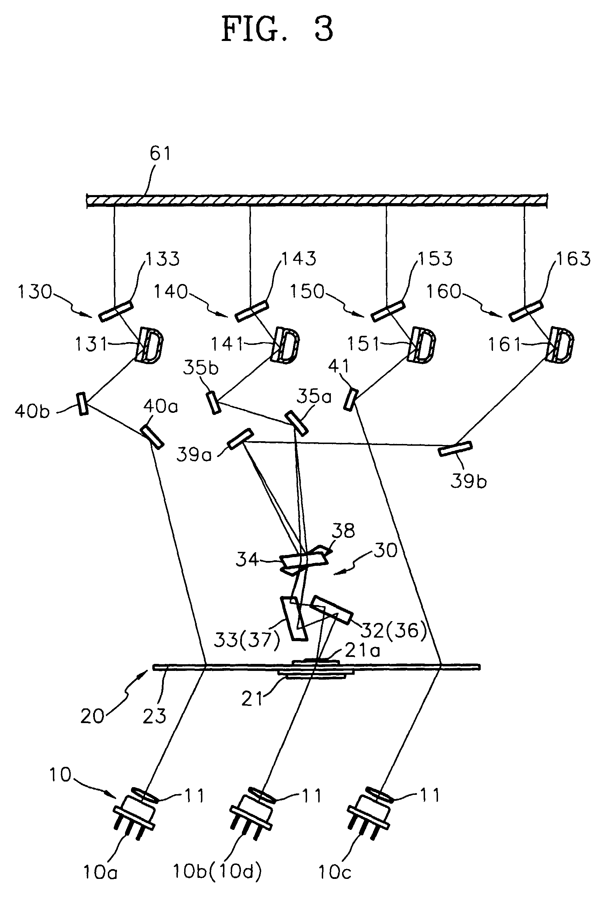

A multi-beam scanning apparatus according to another embodiment of the present invention will now be described referring to Figure 3. Here, the same reference numerals as those in Figure 2 denote the same elements.

As shown in Figure 3, each of the beams emitted from the optical sources 10a through 10d is collimated by a collimating lens 11. The collimated beams are diffracted and deflected by the sectors of the deflection disk 23, and the paths of the resultant beams are changed by the beam path changing means 30, to head towards beam correcting means 130, 140, 150 and 160, respectively.

The beam path changing means 30 is comprised of first mirrors 40a and 40b for changing the path of a beam emitted from the optical source 10a, second mirrors 32, 33, 34, 35a and 35b for changing the path of a beam emitted from the optical source 10b, a third mirror 41 for changing the path of a beam emitted from the optical source 10c, and fourth mirrors 36, 37, 38, 39a and 39b for changing the path of a beam emitted from the optical source 10d.

The beam correcting means 130, 140, 150 and 160 are installed on light paths between the beam deflector 20 and a photosensitive medium, e.g., a photoreceptor belt 61, and compensate for the aberrations of beams deflected by the deflection disk 23 in the main scan direction, and shape the corrected beams. The beam correcting means 130, 140, 150 and 160 respectively include reflective members 131, 141, 151 and 161 for focusing and reflecting incident beams, and hologram elements 133, 143, 153 and 163 for diffracting and transmitting the beams deflected by the reflective members 131, 141, 151 and 161.

It is preferable that the reflective members 131, 141, 151 and 161 are curved mirrors capable of focusing incident beams. The hologram elements 133, 143, 153 and 163 diffract the beams reflected by the reflective members 131, 141, 151 and 161 in a sub scan direction of the photosensitive medium 61, e.g., in a direction perpendicular to the direction of the travel of the photosensitive medium 61.

Alternatively, the beam correcting means may include an f-theta lens for correcting the focal position and scan width of an incident beam.

In the operation of the multi-beam scanning apparatus according to the present embodiment, the beam emitted from the optical source 10a and diffracted by the sector 24a (see Figure 2) is changed in its path by the mirrors 40a and 40b, to be incident upon the photosensitive medium 61 via the beam correcting means 130. The beam emitted from the optical source 10b and diffracted by the sector 24b is reflected by the mirrors 32, 33, 34, 35a and 35b, rotated by about 90°, and is incident upon the beam correcting means 140. The beam emitted from the optical source 10c and diffracted by the sector 24c is changed in its path by the mirror 41, to be incident upon the beam correcting means 150. The beam emitted from the optical source 10d and diffracted by the sector 24d is reflected by the mirrors 36, 37, 38, 39a and 39b, rotated by about 90°, and is incident upon the beam correcting means 150.

In the multi-beam scanning apparatus according to the present invention, one deflection disk can deflect at least two beams together, thus minimizing the apparatus. Also, the beam deflection by the deflection disk allows beams to be more stably projected than by the conventional rotating polygonal mirror.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multi beam scanning apparatus comprising an optical source, and a beam deflector (20) for deflecting a beam emitted from the optical source (10a-d), characterized in that the beam deflector (20) includes a deflection disk (23) on which a plurality of sectors (24a-d) for diffracting and transmitting incident beams are formed, and a driving source (21) for rotating the deflection disk (23),
the optical source (10a-d) comprises at least two optical sources for emitting beams onto different sectors (24a-d) of the deflection disk (23),
and the multi beam scanning apparatus comprises a beam path changing means (30) for changing the path of at least one beam among the deflected beams to allow the beams deflected by the beam deflector (20) to form parallel scan lines on an image plane (61).

2. The multi beam scanning apparatus as claimed in claim 1, wherein the beam path changing means (30) is comprised of a plurality of mirrors.

3. The multi beam scanning apparatus as claimed in claim 1, wherein the sectors (24a-d) are comprised of patterns formed by equally dividing the deflection disk.

4. The multi beam scanning apparatus as claimed in claim 1, further comprising a beam correcting means (130, 140, 150, 160) for correcting the beams deflected by the deflection disk (23).

5. The multi beam scanning apparatus as claimed in claim 4, wherein the beam correcting means (130, 140, 150, 160) comprises:
reflective members (131, 141, 151, 161) for focusing and reflecting the beams deflected by the deflection disk; and
hologram elements (133, 143, 153, 163) for diffracting and transmitting the reflected beams in a sub scan direction of the photoreceptor.

6. The multi beam scanning apparatus as claimed in claim 1, wherein the deflection disk (23) is comprised of four sectors (24a-d) and the optical source (10) comprises four optical sources (10a-d) for projecting beams into the respective sectors (24a-d).
